# FASCICULE DE BREVET EUROPEEN

(11) **EP 4 041 017 B1**
(45) Date de publication et mention de la délivrance du brevet: **25.09.2024**
(21) Numéro de dépôt: 20789123.5
(22) Date de dépôt: 10.10.2020
(51) Int. Cl.: A43C 7/00, A43C 11/24, G09B 19/00

(54) **DISPOSITIF D'AIDE AU NOUAGE DES LACETS**
VORRICHTUNG ZUR UNTERSTÜTZUNG VON SCHNÜRBÄNDERN
DEVICE FOR ASSISTING WITH TYING LACES

(30) Priorité: 11.10.2019 EP 19202785
(43) Date de publication de la demande: 17.08.2022
(73) Titulaire: Markevitch, Roxane, 1227 Carouge (CH)
(72) Inventeur: Markevitch, Roxane, 1227 Carouge (CH)
(74) Mandataire: KATZAROV S.A.
(86) Numéro de dépôt international: PCT/EP2020/078523
(87) Numéro de publication internationale: WO 2021/069730

(56) Documents cités:
- US-A- 4 342 557
- US-A1- 2014 115 842
- US-A1- 2016 219 984

## Description

### DOMAINE TECHNIQUE DE L'INVENTION

La présente invention se rapporte à un dispositif de maintien de corde et plus précisément à un dispositif d'aide au nouage de lacets et à son procédé d'utilisation.

### ETAT DE LA TECHNIQUE

Depuis la création des souliers à lacet, le nouage de ces derniers ont souvent, voire toujours constitué une étape déterminante dans la vie d'un enfant, d'un adolescent voire même d'un jeune adulte.

Si un jour ou l'autre nous oublions à quel point cette étape fut à l'époque une vraie source de fierté lorsque nous la passâmes, il suffit de voir ses enfants traverser cette épreuve pour rapidement s'en souvenir.

Le procédé de nouage des lacets d'un soulier prend un certain temps d'adaptation et nécessite souvent quelques minutes pour que l'enfant y arrive ou échoue, et à cet instant l'adulte accompagnant l'aide. Si dans le cadre familial cela peut se révéler anecdotique étant donné le faible nombre d'enfant par famille, il en est tout autre dans le cadre scolaire où l'instituteur ou l'institutrice doit aider plus d'une vingtaine d'enfants.

Il est donc nécessaire de développer un outil permettant à l'enfant d'accélérer l'apprentissage du nouage de lacets de soulier tout en gardant un aspect ludique, et pourquoi pas de mode.

De manière générale, le nouage de soulier comprend deux étapes distinctes. La première consiste à faire un noeud simple avec les deux lacets et serrer la chaussure. La seconde consiste à former deux boucles avec lesquelles un second noeud simple est formé. La difficulté majeure pour l'enfant consiste à simultanément former les deux boucles et les nouer tout en gardant le soulier serré.

Un objet de la présente invention est donc de résoudre les problèmes décrits ci-dessus, et plus particulièrement de fournir un dispositif et un procédé permettant de réaliser facilement toutes les étapes de nouage de lacets de soulier de manière successive.

US 2016/219984 A1 divulgue un système d'aide au nouage de lacets constitué d'un seul élément.

### OBJET DE L'INVENTION

A cet effet, l'invention concerne un système d'aide au nouage de lacets tel que spécifié dans la revendication indépendante 1 annexée et un procédé d'aide au nouage de soulier tel que spécifié dans la revendication indépendante 11 annexée. Des modes de réalisation préférés de l'invention sont décrits dans les revendications dépendantes.

Selon un mode de réalisation préféré, le premier et le second élément sont des éléments plans courbés ou droits. Ainsi ils peuvent facilement épouser plusieurs types de supports.

De manière avantageuse, les premier et second éléments sont réalisés en un matériau compris dans le groupe comprenant au moins l'un parmi un métal, précieux ou non, un polymère rigide, semi-rigide ou souple, un composé organique, un matériau céramique ou du même genre.

Avantageusement, les premiers trous du premier élément et les trous du second élément ont un diamètre compris dans la gamme de 3 mm à 8 mm, de préférence 4 mm à 5 mm, idéalement 4.5 mm. De cette manière le lacet passe facilement dans les premiers trous.

Selon un mode de réalisation préféré, les seconds trous du premier élément ont un diamètre compris dans la gamme de 0.5 mm à 5 mm, de préférence 2 mm à 3 mm, idéalement 2.5 mm. Ce mode de réalisation permet donc de facilement bloquer un lacet dans les seconds trous.

De manière avantageuse, au moins l'un du premier et du second élément ont une taille comprise entre 2 et 10 cm de longueur, 2 et 5 cm de largeur et 1 et 5 mm d'épaisseur. Ainsi, ils peuvent facilement être disposés sur un soulier.

De préférence, les fentes reliant les premiers et seconds trous du premier élément ont une longueur comprise entre 1 mm et 1 cm et une épaisseur comprise entre 0.5 et 5 mm. De cette manière, la fente permet à plusieurs types de lacets de passer d'un trou où il est libre à un trou où il est bloqué.

Selon un mode de réalisation préféré, l'épaisseur de la fente diminue le long de sa longueur entre le premier trou et le second trou. Ce mode de réalisation permet donc de facilement bloquer le lacet dans le premier élément.

De manière avantageuse, lorsque les deux éléments sont agencés de sorte à ce que lorsqu'ils sont disposés l'un sur l'autre, les seconds trous du premier élément sont en regard des premiers trous du second élément. Ainsi, les deux éléments peuvent être superposés exactement l'un sur l'autre.

De préférence, les trous du second élément sont alignés l'un à côté de l'autre selon une droite. Ainsi, les trous des deux éléments peuvent être facilement superposés exactement l'un sur l'autre.

Selon un deuxième aspect, la présente invention vise un procédé d'aide au nouage de soulier comprenant une utilisation du dispositif d'aide au nouage de soulier selon l'une des revendications 1 à 11 comprenant les étapes suivantes appliquer le premier élément sur le soulier de sorte à faire passer les lacets dans les premiers trous du premier élément transversalement par rapport au premier élément, une fois les lacets serrés, déplacer les lacets des premiers trous aux seconds trous parallèlement au plan du premier élément, via les fentes respectives de sorte à bloquer les lacets en position serrées, appliquer le second élément sur le premier élément de sorte à faire passer les lacets dans des premiers trous dans un premier sens du bas vers le haut, puis faire passer les lacets dans le second trou dans un second sens inverse au premier sens de sorte à ce que ledit lacet puisse former une boucle au-dessus du dispositif. Les buts, avantages et caractéristiques particulières du système objet de la présente invention étant similaires à ceux de l'oreiller objet de la présente invention, ils ne sont pas rappelés ici.

De préférence, le mouvement des lacets par rapport au premier élément est un mouvement en deux temps, premièrement transversal par rapport au plan du premier élément lorsqu'ils traversent le trou puis parallèle lorsqu'ils glissent dans les fentes. De cette manière, il est possible de nouer ses lacets avec deux mouvements distincts faciles à comprendre.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- les figures 1a, 1b et 1c représentent, schématiquement et en coupe, un mode de réalisation du premier élément du dispositif et deux modes réalisation du second élément du dispositif de la présente invention, respectivement ; et

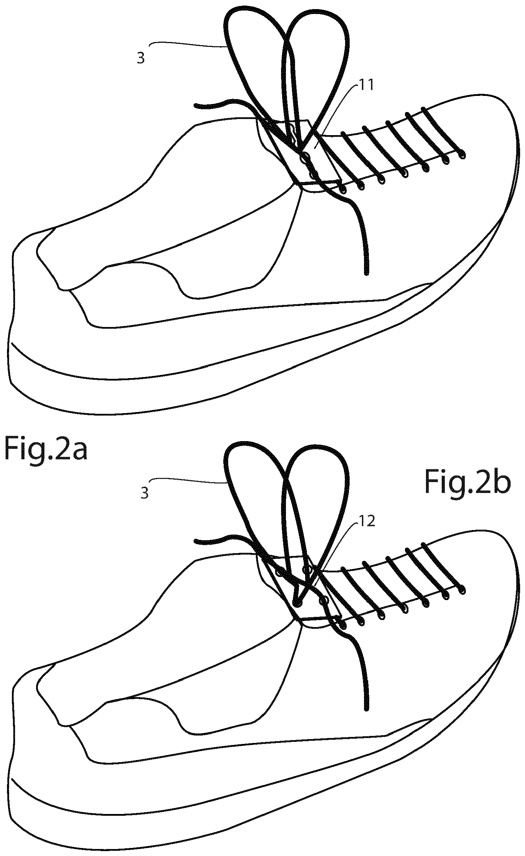

- les figures 2a et 2b représentent, schématiquement, le dispositif d'aide au nouage de lacets disposé sur un soulier.

### DESCRIPTION DETAILLEE DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

L'invention se rapport à dispositif d'aide au nouage de lacets comprenant un premier élément 11 présentant au moins deux paires de trous 12, 13, les trous de chaque paire étant reliés par une fente 14, et caractérisé en ce que chaque paire de trous 12, 13 du premier élément 11 comprend un premier trou 121, 131 de dimension adaptée à laisser se déplacer un lacet 3 dans celui-ci et un second trou 122, 132 de dimension adaptée à bloquer tout déplacement dudit lacet 3. Ainsi, il est possible de bloquer les lacets 3 dans les seconds trous 122, 132 facilement.

Ainsi l'utilisateur fait passer ses lacets 3 dans les premiers trous 121, 131, les déplace le long de la fente 14 et les bloque dans les seconds trous 122, 132 de sorte à garder les lacets tirés. L'extrémité libre pouvant être utilisée selon l'utilisateur en faisant un noeud ou autre, tel qu'avec l'utilisation d'une seconde plaque 21.

Il est à noter que le premier élément 11 peut comprend d'autres types d'éléments tels que des renfoncements, des fentes sur les côtés etc.

Avantageusement, le dispositif comprend un second élément 21 présentant au moins deux paires de trous 22, 32 et agencé pour être superposé au premier élément 11, et chaque paire de trous 22, 23 du second élément 21 comprend un premier trou 221, 231 adapté à laisser passer ledit lacet 3 dans un premier sens et un second trou 222, 232 adapté à laisser passer ledit lacet 3 dans un second sens inverse au premier sens de sorte à ce que ledit lacet 3 puisse former une boucle sur le dispositif.

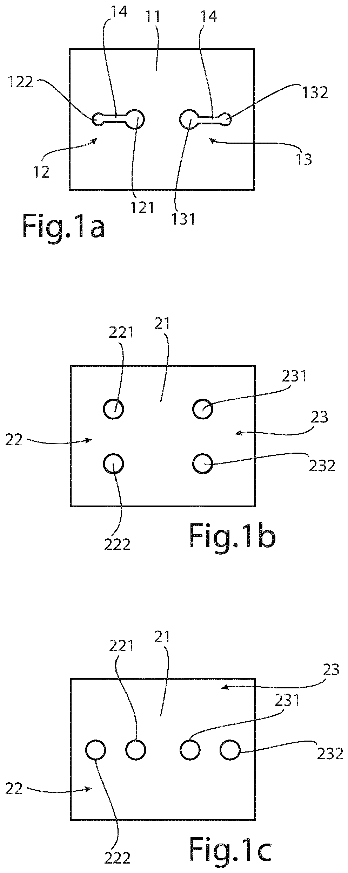

On observe, sur les figures 1a et 1b, qui ne sont pas à l'échelle, une vue schématique d'un mode de réalisation du dispositif d'aide au nouage de lacets 3 comprenant un premier élément 11 présentant au moins deux paires de trous 12, 13, les trous de chaque paire étant reliés par une fente 14 représenté sur la figure 1a, et un second élément 21 présentant au moins deux paires de trous 22, 23 en forme de carré ou alignés, représenté sur la figure 1b et 1c et agencé pour être superposé au premier élément 11. Comme on peut le voir, chaque paire de trous 12, 13 du premier élément 11 comprend un premier trou 121, 131 de dimension adaptée à laisser se déplacer un lacet 3 dans celui-ci et un second trou 122, 132 de dimension adaptée à bloquer tout déplacement du lacet 3.

Parallèlement, chaque paire de trous 22, 23 du second élément 21 comprend un premier trou 221, 231 adapté à laisser passer ledit lacet 3 dans un premier sens, de préférence vers extérieur, c'est-à-dire du côté soulier vers le côté opposé, et un second trou 222, 232 adapté à laisser passer le lacet 3 dans un second sens inverse au premier sens, c'est-à-dire de l'extérieur vers le soulier, de sorte à ce que le lacet puisse former une boucle sur le dispositif, c'est-à-dire, du côté du dispositif opposé au soulier.

De préférence, le premier et le second élément 11, 21 sont des éléments plans courbés ou droits présentant une taille comprise entre 2 et 10 cm de longueur, 2 et 5 cm de largeur et 1 et 5 mm d'épaisseur, et sont réalisés en un matériau compris dans le groupe comprenant au moins l'un parmi un métal, précieux ou non, un polymère rigide, semi-rigide ou souple, un composé organique, un matériau céramique ou du même genre.

Egalement, préférablement, les premiers trous 121, 131 du premier élément 11 et les trous 221, 222, 231, 232 du second élément 21 ont un diamètre compris dans la gamme de 3 mm à 8 mm, de préférence 4 mm à 5 mm, idéalement 4.5 mm, alors que les seconds trous 122, 132 du premier élément 11 un diamètre compris dans la gamme de 0.5 mm à 5 mm, de préférence 2 mm à 3 mm, idéalement 2.5 mm.

De même, les fentes 14 reliant les premiers 121, 131 et seconds trous 122, 132 du premier élément 11 ont une longueur comprise entre 1 mm et 1 cm et une épaisseur comprise entre 0.5 et 5 mm. Bien que cela n'apparaisse pas sur la figure 1a, l'épaisseur de la fente 14 diminue de préférence le long de sa longueur entre le premier trou 121, 131 et le second trou 122, 132.

De même, bien que cela n'apparaisse pas sur les figures, lorsque les deux éléments 11, 21 sont agencés de sorte à ce que lorsqu'ils sont disposés l'un sur l'autre, les premiers trous 121, 131 du premier élément 11 sont en regard des premiers trous 221, 231 du second élément 21.

L'invention concerne également une utilisation du dispositif décrit plus haut comprenant un procédé d'aide au nouage de lacets, de préférence sur un soulier, comprenant les étapes consistant à appliquer le premier élément 11 sur le soulier de sorte à faire passer les lacets 3 dans les premiers trous 121, 131 du premier élément 11 transversalement par rapport au premier élément 11, ajuster les lacets 3 en position serrée de sorte à minimiser la longueur de lacet 3 entre les premiers trous 121, 131 et le soulier et déplacer les lacets des premiers trous 121, 131 aux seconds trous 122, 132, parallèlement au plan du premier élément 11, via les fentes respectives 14 de sorte à bloquer les lacets en position serrées.

Par la suite, il convient d'appliquer le second élément 21 sur le premier élément 11 de sorte à faire passer les lacets 3 dans les premiers trous 221, 231 dans un premier sens vers l'extérieur, puis faire passer les lacets 3 dans les seconds trous 222, 232 dans un second sens inverse au premier sens de sorte à ce que ledit lacet 3 puisse former une boucle sur un côté du dispositif opposé au soulier

Ainsi, le mouvement des lacets par rapport au premier élément 11 est un mouvement en deux temps, premièrement transversal par rapport au plan du premier élément 11 lorsqu'ils traversent le trou puis parallèle lorsqu'ils glissent dans les fentes 14, alors que le mouvement par rapport au second élément 221 et doublement transversal à celui-ci.

## Revendications

1. Système d'aide au nouage de lacets comprenant un lacet (3) et un dispositif d'aide au nouage de lacets comprenant un premier élément (11) présentant au moins deux paires de trous (12, 13), les trous de chaque paire étant reliés par une fente (14), dans lequel chaque paire de trous (12, 13) du premier élément (11) comprend un premier trou (121, 131) de dimension adaptée à laisser se déplacer un lacet (3) dans celui-ci et un second trou (122, 132) de dimension adaptée à bloquer tout déplacement dudit lacet (3), et **caractérisé en ce qu'**il comprend un second élément (21) présentant au moins deux paires de trous (22, 23) et agencé pour être superposé au premier élément (11), et chaque paire de trous du second élément (21) comprend un premier trou (221, 231) adapté à laisser passer ledit lacet (3) dans un premier sens et un second trou (222, 232) adapté à laisser passer ledit lacet dans un second sens inverse au premier sens de sorte à ce que ledit lacet puisse former une boucle sur le dispositif.

2. Système selon la revendication 1, **caractérisé en ce que** le premier et le second élément (21) sont des éléments plans courbés ou droits.

3. Système selon la revendication 1 ou 2 **caractérisé en ce que** les premier et second éléments (11, 21) sont réalisés en un matériau compris dans le groupe comprenant au moins l'un parmi un métal, précieux ou non, un polymère rigide, semi-rigide ou souple, un composé organique, un matériau céramique ou du même genre.

4. Système selon l'une quelconque des revendications 2 à 3, **caractérisé en ce que** les premiers trous (121, 131) du premier élément (11) et les trous (221, 231) du second élément (21) ont un diamètre compris dans la gamme de 3 mm à 8 mm, de préférence 4 mm à 5 mm, idéalement 4.5 mm.

5. Système selon l'une quelconque des revendications 1 à 4, **caractérisé en ce que** les seconds trous (122, 132) du premier élément (11) ont un diamètre compris dans la gamme de 0.5 mm à 5 mm, de préférence 2 mm à 3 mm, idéalement 2.5 mm.

6. Système selon l'une quelconque des revendications 2 à 5, **caractérisé en ce que** au moins l'un du premier (11) et du second élément (21) ont une taille comprise entre 2 et 10 cm de longueur, 2 et 5 cm de largeur et 1 et 5 mm d'épaisseur.

7. Système selon l'une quelconque des revendications 1 à 6, **caractérisé en ce que** les fentes (14) reliant les premiers (121, 131) et seconds trous (122, 132) du premier élément (11) ont une longueur comprise entre 1 mm et 1 cm et une épaisseur comprise entre 0.5 et 5 mm.

8. Système selon l'une quelconque des revendications précédentes, **caractérisé en ce que** l'épaisseur de la fente (14) diminue le long de sa longueur entre le premier trou et le second trou (121, 131, 122, 132).

9. Système selon l'une quelconque des revendications 1 à 8, **caractérisé en ce que** lorsque les deux éléments (11, 21) sont agencés de sorte à ce que lorsqu'ils sont disposés l'un sur l'autre, les premiers trous (121, 131) du premier élément (11) sont en regard des premiers trous (221, 231) du second élément (21).

10. Système selon l'une quelconque des revendications 1 à 9, **caractérisé en ce que** les trous du second élément (21) sont alignés l'un à côté de l'autre selon une droite

11. Méthode d'aide au nouage de soulier, de préférence sur un soulier, comprenant une utilisation du système d'aide au nouage de soulier selon l'une des revendications 1 à 10 comprenant les étapes suivantes :
appliquer le premier élément (11) sur le soulier de sorte à faire passer les lacets (3) dans les premiers trous (121, 131) du premier élément (11) transversalement par rapport au premier élément (11),
ajuster les lacets (3) en position serrée de sorte à minimiser la longueur de lacet entre les premiers trous (121, 131) et le soulier et déplacer les lacets des premiers trous (121, 131) aux seconds trous (122, 132) parallèlement au plan du premier élément (11), via les fentes (14) respectives de sorte à bloquer les lacets (3) en position serrées,
appliquer le second élément sur le premier élément (11) de sorte à faire passer les lacets dans des premiers trous dans un premier sens vers l'extérieur, puis faire passer les lacets dans le second trou dans un second sens inverse au premier sens de sorte à ce que ledit lacet puisse former une boucle sur un côté du dispositif opposé au soulier

12. Méthode selon la revendication 11 dans lequel le mouvement des lacets par rapport au premier élément (11) est un mouvement en deux temps, premièrement transversal par rapport au plan du premier élément (11) lorsqu'ils traversent le trou puis parallèle lorsqu'ils glissent dans les fentes.

## Patentansprüche

1. System zur Unterstützung beim Zubinden von Schnürsenkeln, umfassend einen Schnürsenkel (3) und eine Vorrichtung zur Unterstützung beim Zubinden von Schnürsenkeln, die ein erstes Element (11) umfasst, das mindestens zwei Paar Löcher (12, 13) aufweist, wobei die Löcher jedes Paares durch einen Schlitz (14) verbunden sind, wobei jedes Paar Löcher (12, 13) des ersten Elements (11) ein erstes Loch (121, 131) mit einem zum Hineinbewegen eines Schnürsenkels (3) in dieses geeigneten Maß und ein zweites Loch (122, 132) mit einem zum Blockieren jeglicher Bewegung des Schnürsenkels (3) geeigneten Maß umfasst, und **dadurch gekennzeichnet, dass** sie ein zweites Element (21) umfasst, das mindestens zwei Paar Löcher (22, 23) aufweist und dazu gestaltet ist, dem ersten Element (11) überlagert zu werden, und jedes Paar Löcher des zweiten Elements (21) ein erstes Loch (221, 231), das zum Durchlassen des Schnürsenkels (3) in eine erste Richtung geeignet ist, und ein zweites Loch (222, 232), das zum Durchlassen des Schnürsenkels in eine zweite Richtung entgegen der ersten Richtung geeignet ist, umfasst, so dass der Schnürsenkel eine Schleife auf der Vorrichtung bilden kann.

2. System nach Anspruch 1, **dadurch gekennzeichnet, dass** das erste und das zweite Element (21) gebogene oder gerade ebene Elemente sind.

3. System nach Anspruch 1 oder 2, **dadurch gekennzeichnet, dass** die ersten und zweiten Elemente (11, 21) aus einem Material hergestellt sind, das in der Gruppe enthalten ist, die mindestens eines unter einem Metall, edel oder nicht, einem starren, halbstarren oder flexiblen Polymer, einer organischen Verbindung, einem keramischen oder gleichartigen Material umfasst.

4. System nach einem der Ansprüche 2 bis 3, **dadurch gekennzeichnet, dass** die ersten Löcher (121, 131) des ersten Elements (11) und die Löcher (221, 231) des zweiten Elements (21) einen Durchmesser in dem Bereich von 3 mm bis 8 mm, bevorzugt 4 mm bis 5 mm, idealerweise von 4,5 mm haben.

5. System nach einem der Ansprüche 1 bis 4, **dadurch gekennzeichnet, dass** die zweiten Löcher (122, 132) des ersten Elements (11) einen Durchmesser in dem Bereich von 0,5 mm bis 5 mm, bevorzugt 2 mm bis 3 mm, idealerweise von 2,5 mm haben.

6. System nach einem der Ansprüche 2 bis 5, **dadurch gekennzeichnet, dass** mindestens eines der ersten (11) und zweiten Elemente (21) eine Größe zwischen 2 und 10 cm Länge, 2 und 5 cm Breite und 1 und 5 mm Dicke hat.

7. System nach einem der Ansprüche 1 bis 6, **dadurch gekennzeichnet, dass** die Schlitze (14), die die ersten (121, 131) und zweiten Löcher (122, 132) des ersten Elements (11) verbinden, eine Länge zwischen 1 mm und 1 cm und eine Dicke zwischen 0,5 und 5 mm haben.

8. System nach einem der vorhergehenden Ansprüche, **dadurch gekennzeichnet, dass** die Dicke des Schlitzes (14) entlang seiner Länge zwischen dem ersten Loch und dem zweiten Loch (121, 131, 122, 132) abnimmt.

9. System nach einem der Ansprüche 1 bis 8, **dadurch gekennzeichnet, dass**, wenn die beiden Elemente (11, 21) so gestaltet sind, dass, wenn sie übereinander angeordnet sind, die ersten Löcher (121, 131) des ersten Elements (11) den ersten Löchern (221, 231) des zweiten Elements (21) gegenüberliegen.

10. System nach einem der Ansprüche 1 bis 9, **dadurch gekennzeichnet, dass** die Löcher des zweiten Elements (21) entlang einer Geraden nebeneinander ausgerichtet sind.

11. Methode zur Unterstützung beim Zubinden eines Schuhs, bevorzugt an einem Schuh, umfassend eine Verwendung des Systems zur Unterstützung beim Zubinden eines Schuhs nach einem der Ansprüche 1 bis 10, umfassend die folgenden Schritte:
Auflegen des ersten Elements (11) auf den Schuh, so dass die Schnürsenkel (3) in die ersten Löcher (121, 131) des ersten Elements (11), quer zu dem ersten Element (11), geführt werden,
Anpassen der Schnürsenkel (3) in festgezogener Position so, dass die Schnürsenkellänge zwischen den ersten Löchern (121, 131) und dem Schuh minimiert ist, und Bewegen der Schnürsenkel von den ersten Löchern (121, 131) zu den zweiten Löchern (122, 132), parallel zur Ebene des ersten Elements (11), durch die jeweiligen Schlitze (14), so dass die Schnürsenkel (3) in festgezogener Position blockiert werden,
Auflegen des zweiten Elements auf das erste Element (11), so dass die Schnürsenkel in erste Löcher in eine erste Richtung nach außen hin geführt werden, dann Führen der Schnürsenkel in das zweite Loch in eine zweite Richtung entgegen der ersten Richtung, so dass der Schnürsenkel eine Schleife auf einer zu dem Schuh entgegengesetzten Seite der Vorrichtung bilden kann.

12. Methode nach Anspruch 11, wobei die Bewegung der Schnürsenkel in Bezug auf das erste Element (11) eine Bewegung in zwei Phasen ist, zunächst quer zur Ebene des ersten Elements (11), wenn sie das Loch durchqueren, dann parallel, wenn sie in die Schlitze gleiten.

## Claims

1. A lace tying assistance system comprising a lace (3) and a lace tying assistance device comprising a first element (11) having at least two pairs of holes (12, 13), the holes of each pair being connected by a slot (14), wherein each pair of holes (12, 13) of the first element (11) comprises a first hole (121, 131) with a dimension adapted to allow a lace (3) to move therethrough and a second hole (122, 132) with a dimension adapted to block any movement of said lace (3), and **characterized in that** it comprises a second element (21) having at least two pairs of holes (22, 23) and arranged to be superimposed on the first element (11), and each pair of holes of the second element (21) comprises a first hole (221, 231) adapted to allow said lace (3) to pass in a first direction and a second hole (222, 232) adapted to allow said lace to pass in a second direction opposite to the first direction so that said lace can form a loop on the device.

2. The system according to claim 1, **characterized in that** the first and second elements (21) are curved or straight flat elements.

3. The system according to claim 1 or 2 **characterized in that** the first and second elements (11, 21) are made of a material included in the group comprising at least one of a precious or non-precious metal, a rigid, semi-rigid or flexible polymer, an organic compound, a ceramic material or the like.

4. The system according to any one of claims 2 and 3, **characterized in that** the first holes (121, 131) of the first element (11) and the holes (221, 231) of the second element (21) have a diameter comprised in the range from 3 mm to 8 mm, preferably 4 mm to 5 mm, ideally 4.5 mm.

5. The system according to any one of claims 1 to 4, **characterized in that** the second holes (122, 132) of the first element (11) have a diameter comprised in the range from 0.5 mm to 5 mm, preferably 2 mm to 3 mm, ideally 2.5 mm.

6. The system according to any one of claims 2 to 5, **characterized in that** at least one of the first (11) and the second (21) elements have a size comprised between 2 and 10 cm in length, 2 and 5 cm in width and 1 and 5 mm in thickness.

7. The system according to any one of claims 1 to 6, **characterized in that** the slots (14) connecting the first (121, 131) and second (122, 132) holes of the first element (11) have a length comprised between 1 mm and 1 cm and a thickness comprised between 0.5 and 5 mm.

8. The system according to any one of the preceding claims, **characterized in that** the thickness of the slot (14) decreases along its length between the first hole and the second hole (121, 131, 122, 132).

9. The system according to any one of claims 1 to 8, **characterized in that** when the two elements (11, 21) are arranged so that when they are disposed one over the other, the first holes (121, 131) of the first element (11) are opposite to the first holes (221, 231) of the second element (21).

10. The system according to any one of claims 1 to 9, **characterized in that** the holes of the second element (21) are aligned next to each other according to a straight line.

11. A method for assisting in tying a shoe, preferably on a shoe, comprising a use of the shoe tying assistance system according to any of claims 1 to 10 comprising the following steps:
applying the first element (11) on the shoe so as to pass the laces (3) through the first holes (121, 131) of the first element (11) transversely to the first element (11),
adjusting the laces (3) in a tight position so as to minimize the length of the lace between the first holes (121, 131) and the shoe and moving the laces from the first holes (121, 131) to the second holes (122, 132) parallel to the plane of the first element (11), via the respective slots (14) so as to block the laces (3) in a tight position,
applying the second element on the first element (11) so as to pass the laces through first holes in a first outward direction, then passing the laces through the second hole in a second direction opposite to the first direction so that said lace can form a loop on one side of the device opposite the shoe.

12. The method according to claim 11 wherein the movement of the laces relative to the first element (11) is a two-step movement, first transverse to the plane of the first element (11) when they pass through the hole and then parallel when they slide into the slots.
